# EUROPÄISCHE PATENTSCHRIFT

(11) **EP 1 479 545 B1**
(45) Veröffentlichungstag und Bekanntmachung des Hinweises auf die Patenterteilung: **14.02.2007**
(21) Anmeldenummer: 03291174.5
(22) Anmeldetag: 20.05.2003
(51) Int. Cl.: B60H 1/00

(54) **Klimaanlage, insbesondere für Fahrzeuge sowie Verfahren zur Klimatisierung**
Air conditioner, particularly for vehicles, and method for air-conditioning
Climatisation, en particulier pour véhicule, et méthode de climatisation

(43) Veröffentlichungstag der Anmeldung: 24.11.2004
(73) Patentinhaber: Behr France Rouffach SAS, 68250 Rouffach (FR)
(72) Erfinder: Peter, Vincent, 68190 Ensisheim (FR)
(74) Vertreter: Grauel, Andreas

(56) Entgegenhaltungen:
- DE-A- 19 807 002
- US-A- 3 671 095
- US-A- 4 842 047

## Beschreibung

Die Erfindung betrifft eine Klimaanlage, insbesondere für Fahrzeuge, die für eine in unterschiedlichen Bereichen des zu klimatisierenden Raumes individuelle Parametereinstellung mehrzonig, insbesondere zweizonig, aufgebaut ist, mit mehreren, jeweils einer Zone zugeordneten, antreibbaren Lüfterrädern.

Bekannte Klimaanlagen der eingangs genannten Art nehmen aufgrund des Zonenaufbaus einen relativ großen Bauraum ein. Ferner erfordert der mehrzonige Aufbau eine entsprechende Anzahl von Aggregaten, um individuell die Zonen des zu klimatisierenden Raumes in Bezug auf bestimmte Parameter behandeln zu können. Insbesondere dann, wenn eine derartige Klimaanlage als Zusatzklimaanlage eingesetzt und im Heck des Fahrzeugs untergebracht wird, ist der große Raumbedarf von Nachteil, da entsprechend weniger Platz für den Kofferraum des Fahrzeugs zur Verfügung steht.

Aus der Offenlegungsschrift DE 198 07 002 A ist eine Klimaanlage für ein Fahrzeug bekannt, welche zwei Gebläseeinheiten mit jeweils zwei Lüftern aufweist, die mit einer einzigen Drehwelle verbunden sind. Innerhalb des Klimatisierungsgehäuses erfolgt eine Unterteilung der Luftführung mittels Trennwandplatten, wobei eine Trennwandplatte an dem zentralen Bereich des Fahrzeugs zu unabhängigen Regelung der Temperatur der linken und rechten Seite des Fahrgastraumes dient.

Der Erfindung liegt die Aufgabe zugrunde, eine Klimaanlage zu schaffen, die nur einen sehr geringen Raumbedarf benötigt und ferner preisgünstig ist. Insbesondere kann sie als Zusatzklimaanlage, bevorzugt als Heckanlage eines Fahrzeugs, eingesetzt sein.

Diese Aufgabe wird gelöst durch einen einzigen Lüfterantrieb, der mehrere, jeweils einer Zone zugeordnete Lüfterräder antreibt und eine Luftmassen-Verteileinrichtung den von den Lüfterrädern jeweils geförderten Luftmassenstrom in der zugehörigen Zone individuell einstellt. Mit nur einem einzigen Lüfterantrieb, der sämtliche Zonen der Klimaanlage mit entsprechenden Luftmassenströmen versorgt, steht eine preisgünstige Lösung zur Verfügung, da nicht jeder Zone jeweils ein Lüfterantrieb zugeordnet ist, sondern alle Zonen nur einen einzigen aufweisen. Jeder Zone ist jedoch ein Lüfterrad zugeordnet. Um sicherzustellen, dass in den einzelnen Zonen jeweils der zugehörige, gewünschte Luftmassenstrom eintritt, ist die Luftmassenstrom-Verteileinrichtung vorgesehen, die den von den Lüfterrädern jeweils geförderten Luftmassenstrom je Zone individuell einstellt. Hierdurch wird trotz des nur einen Lüfterantriebs eine Individualisierung in den Zonen geschaffen. Die erfindungsgemäße Klimaanlage nimmt nur einen relativ geringen Bauraum ein, da nur ein Lüfterantrieb vorhanden ist.

Die Klimaanlage weist eine Steuer- oder Regeleinrichtung auf, die die Drehzahl des Lüfterantriebs vorrangig und die Drosselung des Luftmassenstroms nachrangig einstellt. Insofern liegt eine Prioritätsverteilung vor. Der Lüfterantrieb wird auf eine Drehzahl gebracht, die sicherstellt, dass die maximale Luftmassenstromanforderung der zugehörigen Zone befriedigt wird. Ist dies sichergestellt, so wird die Drosselung in der anderen Zone oder den anderen Zonen entsprechend vorgenommen.

Alternativ oder ergänzend zur Steuer- oder Regeleinrichtung ist bei einer weiteren Lösung der vorgenannten Aufgabe vorgesehen, dass die Luftmassenstrom-Verteileinrichtung bei einer zweizonigen Ausbildung nur einen einzigen Stellantrieb aufweist, der vorzugsweise ein einziges Strömungsquerschnitt-Drosselorgan verlagert, das -je nach Verlagerungsstellung- mit dem einen oder mit dem anderen der beiden, von den zugehörigen Lüfterrädern geförderten Luftmassenströmen oder mit keinem der beiden Luftmassenströmen drosselnd zusammenwirkt. Die Ausgestaltung mit nur einem einzigen Stellantrieb und vorzugsweise nur einem einzigen Strömungsquerschnitt-Drosselorgan verringert die Anzahl der Baugruppen und damit die Kosten. Überdies wird nur ein entsprechender Raumbedarf beansprucht. Da -wie vorstehend erwähnt- der Parameter "Luftmassenstrom" mittels der Drehzahl des Lüfterantriebs in Bezug auf die maximale Anforderung in einer Zone eingestellt wird, kann in der anderen Zone zur Einstellung des Parameters "Luftmassenstrom" die Drosselung vorgenommen werden. Mithin gibt das Strömungsquerschnitt-Drosselorgan bei einer Zweizonen-Ausbildung den einer Zone zugeordneten Strömungsweg vollständig frei und nimmt eine entsprechende Drosselung in dem der anderen Zone zugeordneten Strömungsweg vor. Sofern in beiden Zonen eine gleichgroße Anforderung an den Luftmassenstrom besteht, nimmt das Drosselorgan eine Stellung ein, in der weder der eine noch der andere Querschnitt gedrosselt wird.

Insbesondere ist vorgesehen, dass der Lüfterantrieb eine Mehrfachwellen-Anordnung aufweist, deren Wellenenden mit jeweils einem Lüfterrad versehen sind.

Nach einer Weiterbildung der Erfindung ist vorgesehen, dass der Lüfterantrieb eine Doppelwelle aufweist, deren beide Wellenenden jeweils ein Lüfterrad tragen. Unter "Doppelwelle" ist eine Welle zu verstehen, die im mittleren Bereich den Rotor des Lüfterantriebs trägt und deren einander diametral gegenüberliegende Wellenenden jeweils mit einem Lüfterrad versehen sind. Der Lüfterantrieb ist bevorzugt als Elektromotor ausgebildet.

Von Vorteil ist eine Steuer- oder Regeleinrichtung, die die Drehzahl des Lüfterantriebs derart einstellt, dass in der Zone mit der maximalen Anforderung des zugehörigen Luftmassenstroms, dieser Luftmassenstrom gefördert wird. Die Drehzahl wird somit immer entsprechend der Maximalanforderung des Luftmassenstromes in der zugehörigen Zone eingestellt. Die übrigen Zonen oder -bei einer zweizonigen Ausbildung- die übrige Zone würde aufgrund dieser vorgegebenen Drehzahl des Lüfterantriebs mit demselben Luftmassenstrom versorgt werden, was bei unterschiedlicher Zoneneinstellung jedoch nicht erwünscht ist. Aus diesem Grunde greift die Luftmassenstrom-Verteileinrichtung ein und drosselt in den Zonen oder in der Zone mit niedrigerer Luftmassenstrom-Anforderung die Luftmassenströme beziehungsweise den Luftmassenstrom auf den jeweils gewünschten Wert. Hierbei ist es von Vorteil, wenn in der Zone mit der maximalen Anforderung des zugehörigen Luftmassenstroms die Luftmassenstrom-Verteileinrichtung einen maximalen Strömungsquerschnitt freigibt. Hier wird vorzugsweise nicht gedrosselt, was sicherstellt, dass der Lüfterantrieb mit möglichst niedrigem Energieeinsatz gefahren wird.

Nach einer Weiterbildung der Erfindung ist den Lüfterrädern ein Verdampfer -in Strömungsrichtung der Luftmassenströme gesehen- vor- oder nachgeschaltet, wobei jeder Zone ein im Querschnitt von der Steuer- oder Regeleinrichtung einstellbarer, den Verdampfer umgehender Bypass zugeordnet ist. Mittels des Verdampfers lässt sich der jeweiligen Zone ein gekühlter Luftmassenstrom zuführen. Da jeder Zone ein entsprechender Bypass zugeordnet ist, kann mit einem Teil-Luftmassenstrom der Verdampfer beziehungsweise ein der Zone zugeordneter entsprechender Bereich des Verdampfers umgangen werden. Handelt es sich bei dem Luftmassenstrom, der den Bypass passiert, um ungekühlte Luft oder um Innenraumluft aus dem zu klimatisierenden Raum oder beispielsweise um warme Luft aus einer Front-Klimaanlage eines Fahrzeugs, so lässt sich eine Temperierung vornehmen, das heißt, die der Zone zugeführte Luft setzt sich zu einem Anteil aus Luft zusammen, die den Verdampfer durchströmt hat und zu einem anderen Anteil aus Luft, die nicht gekühlt oder sogar erwärmt ist. Insbesondere ist ein Verdampfer eingesetzt, der mittels Abtrennung eine Mehrzonen-, insbesondere Zweizonenausbildung aufweist. Dies bedeutet, dass der jeweiligen Zone des zu klimatisierenden Raumes ein entsprechender Bereich des Verdampfers zugeordnet ist. Alternativ ist es auch möglich, dass der Verdampfer keine Abtrennungen aufweist, so dass keine Zonenaufteilung vorliegt.

Die erfindungsgemäße Klimaanlage ist insbesondere als Zusatzklimaanlage ausgebildet, das heißt, ein Fahrzeug weist im Frontbereich eine Hauptklimaanlage auf. Diese versorgt einen Teil des zu klimatisierenden Raumes (gegebenenfalls mehrzonig). Hinzu tritt dann die Zusatzklimaanlage, die einen anderen Teil des zu klimatisierenden Raumes versorgt (dies gegebenenfalls ebenfalls mehrzonig). Die Zusatzklimaanlage kann insbesondere als Heckanlage ausgebildet sein, das heißt, sie befindet sich im Heckbereich des Fahrzeugs.

Ferner betrifft die Erfindung ein Verfahren zur Klimatisierung eines Raumes, insbesondere eines Raumes eines Fahrzeugs, mit mehreren, vorzugsweise zwei, hinsichtlich einer individuellen Parametereinstellung unterschiedlich behandelbaren Zonen des zu klimatisierenden Raumes, mit mehreren, jeweils einer Zone zugeordneten, antreibbaren Lüfterrädern, wobei die Lüfterräder von einem einzigen Lüfterantrieb angetrieben werden und die von den Lüfterrädern jeweils geförderten Luftmassenströme in der zugehörigen Zone individuell durch Querschnittsfreigabe oder Querschnittsdrosselungeingestellt werden.

Die Zeichnungen veranschaulichen die Erfindung anhand eines Ausführungsbeispiels, und zwar zeigt:
- Figur 1: eine perspektivische Ansicht einer Klimaanlage für den Heckbereich eines Fahrzeugs,
- Figur 2: eine Detailansicht der Klimaanlage der Figur 1 und
- Figur 3: eine Draufsicht auf die Klimaanlage der Figur 1.

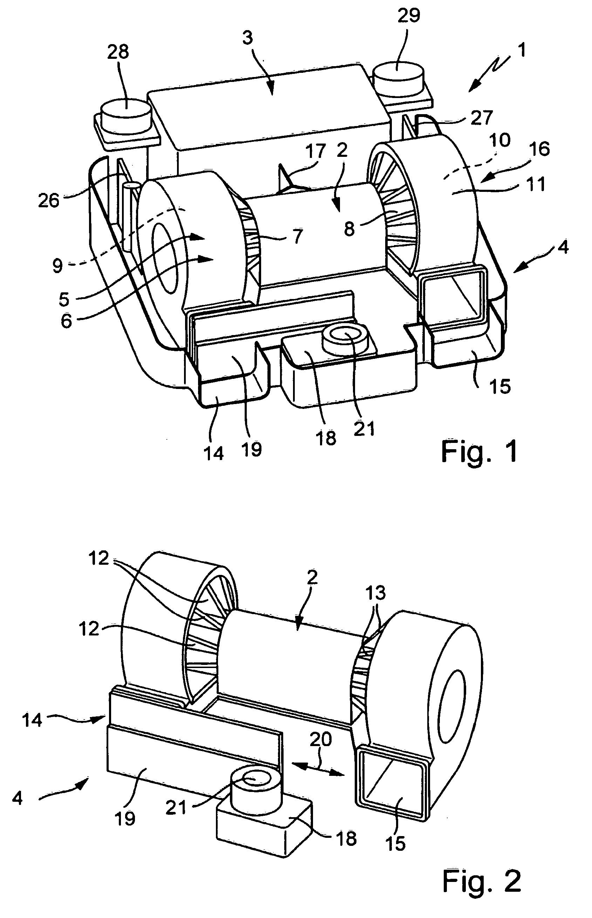

Die Figur 1 zeigt eine Klimaanlage 1, die einen Lüfterantrieb 2, einen Verdampfer 3 und eine Luftmassenstrom-Verteileinrichtung 4 aufweist. Der Lüfterantrieb 2 ist der einzige Antrieb der Klimaanlage 1, wobei er eine Mehrfachwellen-Anordnung 5 aufweist, die als Doppelwelle 6 ausgebildet ist. Dies bedeutet, dass der als Elektromotor ausgebildete Lüfterantrieb 2 zwei einander diametral gegenüberliegende Wellenenden 7, 8 besitzt, auf denen jeweils ein Lüfterrad 9, 10 angeordnet ist. In der Figur 1 ist das jeweilige Lüfterrad 9, 10 nicht unmittelbar zu erkennen, da eine eingehauste (Gehäuse 11) Anordnung mit Einströmöffnungen 12, 13 und Ausströmöffnungen 14, 15 (siehe insbesondere auch Figur 2) vorliegt.

In Strömungsrichtung der von den Lüfterrädern 9, 10 geförderten Luftmassenströme gesehen, ist der Verdampfer 3 dem Lüfterantrieb 2 vorgeschaltet, das heißt, angesaugte Luft passiert zunächst den Verdampfer 3 und dann das von dem Lüfterantrieb 2 und den Lüfterrädern 9, 10 gebildete Gebläse 16. Die Anordnung ist derart getroffen, dass die Klimaanlage zweizönig ausgebildet ist, das heißt, das Lüfterrad 9 versorgt eine Zone des zu klimatisierenden Raumes und das Lüfterrad 10 eine andere Zone des zu klimatisierenden Raumes. Aus diesem Grunde wird der Verdampfer 3 von einer Trennwand 17 durchsetzt, die eine hälftige Teilung vornimmt, so dass die eine Hälfte der einen und die andere Hälfte der anderen Zone zugeordnet ist.

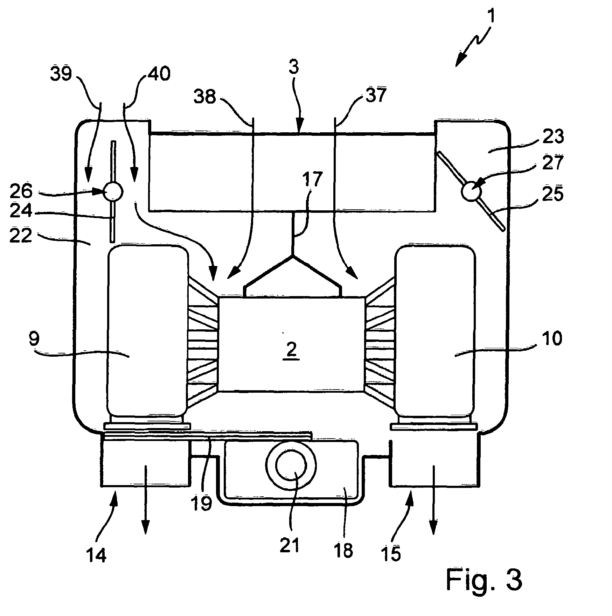

Der Figur 2 ist die erwähnte Luftmassenstrom-Verteileinrichtung 4 näher zu entnehmen. Sie weist einen einzigen Stellantrieb 18 auf, der ein Strömungsquerschnitt-Drosselorgan 19 schieberartig verlagert. Die Bewegungsrichtung des Strömungsquerschnitt-Drosselorgans 19 ist in der Figur 2 mit dem Doppelpfeil 20 gekennzeichnet. Der Stellantrieb 18 weist mindestens ein Antriebsrad 21 auf, das bei Drehung das Strömungsquerschnitt-Drosselorgan 19 schieberartig mitnimmt, wobei es in der aus der Figur 2 hervorgehenden Stellung die Austrittsöffnung 14 vollständig verschließt. Wird es in Richtung der Austrittsöffnung 15 verlagert, so wird mehr und mehr der Querschnitt der Austrittsöffnung 14 freigegeben. Der Abstand zwischen den beiden Austrittsöffnungen 14 und 15 entspricht der Länge des schieberartigen Strömungsquerschnitt-Drosselorgans 21, so dass in einer Mittelstellung (vergleiche auch Figur 3) das Strömungsquerschnitt-Drosselorgan 19 eine Stellung einnimmt, in der beide Austrittsöffnungen 14, 15 vollständig freigegeben sind. Erfolgt eine Verlagerung weiter in Richtung der Austrittsöffnung 15, so bleibt die Austrittsöffnung 14 vollständig freigegeben und der Querschnitt der Ausströmöffnung 15 wird entsprechend abgedeckt, das heißt entsprechend gedrosselt. Wird das Strömungsquerschnitt-Drosselorgan 19 von dem Stellantrieb 18 -gemäß Figur 3- ganz nach rechts verlagert, so erfolgt ein Verschließen der Ausströmöffnung 15.

Den Figuren 1 und 3 ist zu entnehmen, dass beidseitig des Verdampfers 3 jeweils ein Bypass 22, 23 ausgebildet ist, so dass jeweils ein entsprechender Teilluftstrom den Verdampfer 3 ungekühlt umströmen kann. Der eine Bypass 22 wirkt mit dem einen Lüfterrad 9 und der andere Bypass 23 mit dem anderen Lüfterrad 10 zusammen. Jedem Bypass 22, 23 ist eine Querschnitts-Stelleinrichtung 24, 25 in Form von Drehklappen 26, 27 zugeordnet, mit deren Hilfe der Querschnitt des entsprechenden Bypasses 22, 23 verschlossen, in gewünschter Weise geöffnet oder vollständig geöffnet werden kann. Der Antrieb der Drehklappen 26 und 27 erfolgt mit Aktuatoren 28, 29 (Figur 1).

Eine nicht dargestellte Steuer- oder Regeleinrichtung steuert die Drehzahl des als Elektromotor ausgebildeten Lüfterantriebs 2 sowie durch entsprechende Ansteuerung des Stellmotors 18 die Stellung des Strömungsquerschnitt-Drosselorgans 19 und auch durch Ansteuerung der Aktuatoren 28 und 29 die Stellungen der Drehklappen 26, 27.

Es ergibt sich folgende Funktion: Es wird davon ausgegangen, dass die linke Hälfte der Klimaanlage 1 gemäß Figur 3 eine Zone I eines zu klimatisierenden Raumes versorgt, während die rechte Seite der Klimaanlage 1 der Figur 3 eine Zone II des zu klimatisierenden Raumes beschickt. Ferner soll mittels der erwähnten, nicht dargestellten Steuer- oder Regeleinrichtung ein Betriebszustand der Klimaanlage 1 herbeigeführt worden sein, wie er sich aus der Figur 3 ergibt, das heißt, der Bypass 22 ist aufgrund einer entsprechenden Stellung der Drehklappe 26 vollständig geöffnet; die Drehklappe 27 des Bypasses 23 befindet sich in Schließstellung und die Ausströmöffnung 14 wird durch entsprechende, vom Stellantrieb 18 bewirkte Verlagerung des Strömungsquerschnitt-Drosselorgans - 19 verschlossen. Ferner erhält die Steuer- oder Regeleinrichtung durch einen entsprechenden Sensor oder dergleichen ein Anforderungssignal eines bestimmten Luftmassenstromes, der der Zone II zuzuführen ist. Durch individuelle Einstellung, zum Beispiel eines Fahrgastes des Fahrzeugs oder durch den Regelbetrieb der Regeleinrichtung wurde bestimmt, dass der Zone I kein Luftmassenstrom zugeführt werden soll, was sich in der geschlossenen Ausströmöffnung 14 zeigt.

Aus der rechten Hälfte der Figur 3 ist erkennbar, dass vom Lüfterrad 10 ein entsprechender Luftmassenstrom 37 durch den zugeordneten Teil des Verdampfers 3 gesaugt wird, das heißt, hier erfolgt eine entsprechende Abkühlung der Luft. Ein Ansaugen über den zugeordneten Bypass 23 erfolgt nicht, da sich die Drehklappe 27 in Schließstellung befindet. Demzufolge strömt der Luftmassenstrom 37 nach dem Passieren des Verdampfers 3 in die Einströmöffnungen 13 (Figur 2) des dem Lüfterrad 10 zugeordneten Gehäuses ein und wird aus der Ausströmöffnung 15 in die Zone II des zu klimatisierenden Raumes ausgeblasen. Die Anordnung ist dabei derart getroffen, dass die Steuer- oder Regeleinrichtung den als Elektromotor ausgebildeten Lüfterantrieb 2 mit einer derartigen Drehzahl betreibt, dass der in dieser Zone 2 gewünschte Luftmassenstrom eingeblasen wird. Die Zone 2 stellt somit die Zone mit der maximalen Anforderung des zugehörigen Luftmassenstromes dar.

Der rechten Seite der Klimaanlage 1 der Figur 3 ist zu entnehmen, dass der Bypass 22 entsprechend der Stellung der Drehklappe 26 geöffnet ist. Mithin saugt das mit gleicher Drehzahl wie das Lüfterrad 10 rotierende Lüfterrad 9 nicht nur einen Luftmassenstrom 38 über den entsprechenden Anteil des Verdampfers 3 an, sondern auch die Luftmassenströme 39 und 40, die den Bypass 22 passieren. Wäre die Ausströmöffnung 14 nicht vollständig, sondern nur teilweise oder auch gar nicht durch das Strömungsquerschnitt-Drosselorgan 19 verschlossen, so würden sich die unterschiedlich temperierten Luftmassenströme 38, 39 und 40 mischen und aus der Ausströmöffnung 14 als temperierte Luft austreten. Hierbei ist vorausgesetzt, dass es sich bei den Luftmassenströmen 39 und 40 beispielsweise um Luft handelt, die aus dem Inneren des zu klimatisierenden Raumes stammt oder beispielsweise aus warmer Luft, die von einer Front-Klimaanlage geliefert wird. Selbstverständlich sind auch andere Luftlieferquellen denkbar. In der aus der Figur 3 hervorgehenden Stellung des Strömungsquerschnitt-Drosselorgan 19 wird allerdings keine Luft aus der Ausströmöffnung 14 austreten und somit auch nicht zur Zone I des zu klimatisierenden Raumes gelangen.

Im Zuge des laufenden Betriebes wird -je nach Vorgabe durch die Insassen des Fahrzeuges und/oder der Steuer- oder Regeleinrichtung ein entsprechendes Zusammenspiel der verschiedenen Baugruppen der Klimaanlage 1 erfolgen, das heißt, die Drehzahl des Lüfterantriebs 2 wird immer entsprechend der maximalen Luftmassenstromanforderung in der jeweiligen Zone I beziehungsweise II eingestellt; die Stellung des Strömungsquerschnitt-Drosselorgans 19 wird in gewünschter Weise von dem Stellantrieb 18 herbeigeführt und auch die beiden Bypässe 22 und 23 werden in gewünschter Weise geöffnet beziehungsweise geschlossen, so dass insgesamt ein angenehmes Raumklima im zu klimatisierenden Raum geschaffen wird.

Erfindungsgemäß ist insgesamt daher vorgesehen, dass mit nur einem einzigen Lüfterantrieb eine zwei- oder mehrzonige Klimaanlage 1 betrieben wird, wobei mehrere Bypass-Klappen die Einstellung der Parameter der jeweiligen Lufttemperatur erlauben. Vorzugsweise kommt ein 2x2 flutiger Lüfter zum Einsatz. Eine entsprechende Einrichtung, beispielsweise eine Schiebeklappe, sorgt dafür, um die Luftmassenströme zu steuern oder zu regeln. Gegenüber der aus der Figur 3 hervorgehenden Bauform kann auch vorgesehen sein, dass der Lüfterantrieb mit den entsprechenden Lüfterrädern nicht dem Verdampfer nachgeschaltet, sondern dem Verdampfer vorgeschaltet ist. Neben der als Verdampfer ausgebildeten Kühleinrichtung können auch Heizeinrichtungen zur Vorwärmung vorgesehen sein.

Insgesamt ergibt sich eine preiswerte und wenig Bauraum beanspruchende Klimaanlage 1.

## Patentansprüche

1. Klimaanlage, insbesondere für Fahrzeuge, die für eine in unterschiedlichen Bereichen des zu klimatisierenden Raumes individuelle Parametereinstellung mehrzonig, insbesondere zweizonig, aufgebaut ist, mit mehreren, jeweils einer Zone zugeordneten, antreibbaren Lüfterrädern mit einem einzigen Lüfterantrieb, der mehrere, jeweils einer Zone zugordnete Lüfterräder (9,10) antreibt und eine Luftmassenstrom-Verteileinrichtung (4), die den von den Lüfterrädern (9,10) jeweils geförderten Luftmassenstrom in der zugehörigen Zone individuell einstellt, **dadurch gekennzeichnet, dass** die Klimaanlage eine Steuer- oder Regeleinrichtung aufweist, die die Drehzahl des Lüfterantriebs (2) vorrangig und die Drosselung des Luftmassenstroms nachrangig einstellt

2. Klimaanlage nach dem Oberbegriff des Anspruchs 1, **dadurch gekennzeichnet, dass** die Luftmassenstrom-Verteileinrichtung bei einer zweizonigen Ausbildung nur einen einzigen Stellantrieb (18) aufweist, der vorzugsweise ein einziges Strömungsquerschnitt-Drosselorgan (19) verlagert, das -je nach Verlagerungsstellung- mit dem einen oder mit dem anderen der beiden, von den zugehörigen Lüfterrädern (9,10) geförderten Luftmassenströmen oder mit keinem der beiden Luftmassenströme drosselnd zusammenwirkt.

3. Klimaanlage nach Anspruch 1, **dadurch gekennzeichnet, dass** der Lüfterantrieb (2) eine Mehrfachwellen-Anordnung (5) aufweist, deren Wellenenden (7,8) mit jeweils einem Lüfterrad (9,10) versehen sind.

4. Klimaanlage nach einem der vorhergehenden Ansprüche, **dadurch gekennzeichnet, dass** der Lüfterantrieb (2) eine Doppelwelle (6) aufweist, deren beide Wellenenden (7,8) jeweils ein Lüfterrad (9,10) tragen.

5. Klimaanlage nach einem der vorhergehenden Ansprüche, **dadurch gekennzeichnet, dass** die Steuer- oder Regeleinrichtung die Drehzahl des Lüfterantriebs (2) derart einstellt, dass in der Zone mit der maximalen Anforderung des zugehörigen Luftmassenstroms dieser Luftmassenstrom gefördert wird.

6. Klimaanlage nach Anspruch 4, **dadurch gekennzeichnet, dass** in der Zone mit der maximalen Anforderung des zugehörigen Luftmassenstroms die Luftmassenstrom-Verteileinrichtung (4) einen maximalen Strömungsquerschnitt freigibt.

7. Klimaanlage nach einem der vorhergehenden Ansprüche, **dadurch gekennzeichnet, dass** den Lüfterrädern (9,10) ein Verdampfer (3) -in Strömungsrichtung der Luftmassenströme gesehen- vor- oder nachgeordnet ist, und dass jeder Zone ein im Querschnitt von der Steuer- oder Regeleinrichtung einstellbarer, den Verdampfer umgehender Bypass (22,23) zugeordnet ist.

8. Klimaanlage nach einem der vorhergehenden Ansprüche, **dadurch gekennzeichnet, dass** der Verdampfer (3) mittels Abtrennung eine Mehrzonen-, insbesondere Zweizonenausbildung aufweist.

9. Klimaanlage nach einem der vorhergehenden Ansprüche, **gekennzeichnet durch** die Ausbildung als Zusatzklimaanlage, insbesondere Heckanlage.

10. Verfahren zur Klimatisierung eines Raumes, insbesondere eines Raumes eines Fahrzeugs, mit mehreren, vorzugsweise zwei, hinsichtlich einer individuellen Parametereinstellung unterschiedlich behandelbaren Zonen des zu klimatisierenden Raumes, mit mehreren, jeweils einer Zone zugeordneten, antreibbaren Lüfterrädern, wobei die Lüfterräder von einem einzigen Lüfterantrieb angetrieben werden und die von den Lüfterrädern jeweils geförderten Luftmassenströme in der zugehörigen Zone individuell durch Querschnittsfreigabe oder Querschnittsdrosselung eingestellt werden **dadurch gekennzeichnet, dass** mittels einer Steuer- oder Regeleinrichtung die Drehzahl des Lüfterantriebs (2) vorrangig und die Drosselung des Luftmassenstroms nachrangig eingestellt wird.

## Claims

1. An air conditioner, in particular for vehicles, which is constructed with multiple, in particular two zones for setting individual parameters in different areas of the space to be air conditioned, having several drivable fan wheels, each assigned to a zone, a single fan drive which drives several fan wheels (9, 10), each assigned to a zone, and an air mass flow distribution device (4) which individually adjusts the air mass flow conveyed by the fan wheels (9, 10) in the respective zones,
**characterised in that**
the air conditioner has a control or regulating device which sets the speed of the fan drive (2) as a first priority and the throttling of the air mass flow as a second.

2. An air conditioner in accordance with the pre-characterising clause of claim 1,
**characterised in that**
in a two-zone design the air mass flow distribution device has only one actuator (18) which preferably displaces a single flow cross-section throttle organ (19) which - depending on the displacement position - co-operates with throttling effect either with one or other of the two air mass flows conveyed by the respective fan wheels (9, 10) or with neither of the two air mass flows.

3. An air conditioner in accordance with claim,
**characterised in that**
the fan drive (2) has a multiple shaft arrangement (5) with shaft ends (7, 8) which are each provided with a fan wheel (9, 10).

4. An air conditioner in accordance with one of the preceding claims,
**characterised in that**
the fan drive (2) has a double shaft (6) with two shaft ends (7, 8) which each bear a fan wheel (9, 10).

5. An air conditioner in accordance with one of the preceding claims,
**characterised in that**
the control or regulating device adjusts the speed of the fan drive (2) in such a manner that the air mass flow is conveyed in the zone with the maximum demand for said air mass flow.

6. An air conditioner in accordance with claim 4,
**characterised in that**
the air mass flow distribution device (4) releases a maximum flow cross-section in the zone with the maximum demand for said air mass flow.

7. An air conditioner in accordance with one of the preceding claims,
**characterised in that**
an evaporator (3) is provided upstream or downstream - seen in the direction of flow of the mass air flows - of the fan wheels (9, 10), and assigned to each zone is an evaporator bypass (22, 23) with a cross-section which can be adjusted by the control or regulating device.

8. An air conditioner in accordance with one of the preceding claims,
**characterised in that**
the evaporator (3) is designed with multiple, in particular two zones created by means of separation.

9. An air conditioner in accordance with one of the preceding claims,
**characterised by**
its design as an supplementary air conditioner, in particular a rear air conditioner.

10. A process for air conditioning a space, in particular a space in a vehicle, said space to be air conditioned having multiple, preferably two zones which can be treated differently by means of individual parameter setting, having several drivable fan wheels each assigned to a zone, the fan wheels being driven by a single fan drive and the air mass flows conveyed by the fan wheels in the respective zones being adjusted individually by releasing or throttling the cross section,
**characterised in that**
using a control or regulating device the speed of the fan drive (2) is set as a first priority and the throttling of the air mass flows as a second.

## Revendications

1. Installation de climatisation, en particulier pour des véhicules, qui est mise en place sur plusieurs zones, en particulier deux zones, pour un réglage individuel de paramètres dans différentes zones de l'espace à climatiser, comprenant plusieurs roues de ventilateur pouvant être entraînées, attribuées chacune à une zone, avec un entraînement de ventilateur unique, qui entraîne plusieurs roues de ventilateur (9, 10) attribuées chacune à une zone et un dispositif répartiteur de flux massique d'air (4), qui règle le flux massique d'air respectivement transporté par les roues de ventilateur (9, 10) dans la zone spécifique, **caractérisée en ce que** l'installation de climatisation présente un dispositif de commande ou de réglage qui règle le régime de l'entraînement de ventilateur (2) en priorité et l'étranglement du flux massique d'air de façon secondaire.

2. Installation de climatisation selon le préambule de la revendication 1, **caractérisée en ce que** le dispositif répartiteur du flux massique d'air présente dans le cas d'une réalisation en deux zones uniquement un seul servomoteur (18), qui déplace de préférence un unique organe d'étranglement de section d'écoulement (19), lequel coopère par étranglement, selon la position de déplacement, avec l'un ou avec l'autre des deux flux massiques d'air transportés par les roues de ventilateur (9, 10) spécifiques ou avec aucun des deux flux massiques d'air.

3. Installation de climatisation selon la revendication 1, **caractérisée en ce que** l'entraînement de ventilateur (2) présente un agencement multi-arbres (5), dont les extrémités d'arbre (5) sont dotées chacune d'une roue de ventilateur (9, 10).

4. Installation de climatisation selon l'une quelconque des revendications précédentes, **caractérisée en ce que** l'entraînement de ventilateur (2) présente un arbre double (6), dont les deux extrémités d'arbre (7, 8) portent chacune une roue de ventilateur (9, 10).

5. Installation de climatisation l'une quelconque des revendications précédentes, **caractérisée en ce que** le dispositif de commande ou de réglage règle le régime de l'entraînement de ventilateur (2) de telle sorte que ce flux massique d'air est transporté dans la zone avec l'exigence maximale du flux massique d'air correspondant.

6. Installation de climatisation selon la revendication 4, **caractérisée en ce que**, dans la zone avec l'exigence maximale du flux massique d'air correspondant, le dispositif répartiteur du flux massique d'air (4) libère une section d'écoulement maximale.

7. Installation de climatisation selon l'une quelconque des revendications précédentes, **caractérisée en ce qu'**un évaporateur (3) est disposé en amont ou en aval - dans le sens d'écoulement des flux massiques d'air - des roues de ventilateur (9, 10) et **en ce qu'**une dérivation (22, 23) pouvant être réglée en section par le dispositif de commande ou de réglage et contournant l'évaporateur est attribuée à chaque zone.

8. Installation de climatisation selon l'une quelconque des revendications précédentes, **caractérisée en ce que** l'évaporateur (3) présente au moyen d'une séparation une réalisation en plusieurs zones, en particulier une réalisation en deux zones.

9. Installation de climatisation selon l'une quelconque des revendications précédentes, **caractérisée par** la réalisation sous la forme d'installation de climatisation supplémentaire, en particulier une installation arrière.

10. Procédé pour la climatisation d'un espace, en particulier d'un espace d'un véhicule, comprenant plusieurs zones, de préférence deux zones, pouvant être traitées différemment en ce qui concerne un réglage individuel de paramètres, de l'espace à climatiser, avec plusieurs roues de ventilateur pouvant être entraînées et attribuées chacune à une zone, les roues de ventilateur étant entraînées par un unique entraînement de ventilateur et les flux massiques d'air transportés respectivement par les roues de ventilateur étant amenés dans la zone spécifique individuellement par libération de section ou étranglement de section, **caractérisé en ce que** le régime de l'entraînement de ventilateur (2) est réglé en priorité au moyen d'un dispositif de commande ou de réglage et l'étranglement du flux massique d'air est réglé de façon secondaire.
